# EUROPÄISCHE PATENTSCHRIFT

(11) **EP 3 554 856 B1**
(45) Veröffentlichungstag und Bekanntmachung des Hinweises auf die Patenterteilung: **11.05.2022**
(21) Anmeldenummer: 17783502.2
(22) Anmeldetag: 12.10.2017
(51) Int. Cl.: B22F 10/20, B22F 7/08, B22F 5/10, B60C 11/16, B22F 7/06, B33Y 80/00, B33Y 10/00

(54) **VERFAHREN ZUR HERSTELLUNG EINES SPIKES**
METHOD FOR PRODUCING A SPIKE
PROCÉDÉ DE FABRICATION D'UN CLOU

(30) Priorität: 19.12.2016 DE 102016225427
(43) Veröffentlichungstag der Anmeldung: 23.10.2019
(73) Patentinhaber: Continental Reifen Deutschland GmbH, 30165 Hannover (DE)
(72) Erfinder: SCHLITTENHARD, Jan, 30900 Wedemark (DE); LANGE, Holger, 30171 Hannover (DE); HACKBARTH, Rolf, 30926 Seelze (DE); BERGER, Christoph, 30173 Hannover (DE)
(74) Vertreter: Continental Corporation
(86) Internationale Anmeldenummer: PCT/EP2017/076045
(87) Internationale Veröffentlichungsnummer: WO 2018/114076

(56) Entgegenhaltungen:
- WO-A1-2017/088995
- WO-A1-2017/116821
- WO-A1-2017/116821
- DE-A1- 2 130 506
- DE-A1- 2 130 506
- DE-A1-102013 113 043
- DE-A1-102013 113 043
- DE-A1-102015 217 774
- DE-A1-102015 217 774
- JP-A- 2013 082 309
- JP-A- 2013 082 309

## Beschreibung

Die Erfindung betrifft ein Verfahren zur Herstellung eines Spikes für einen Fahrzeugreifen mit einem Spikekörper und mit einem in den Spikekörper eingesetzten Spikepin.

Spikereifen mit Spikes, welche mit einem Spikekörper und einem darin eingesetzten Spikepin ausgebildet sind, sind bekannt. Der Spikepin ist dabei üblicherweise aus einem besonders harten Metall hergestellt, um eine sichere Übertragung von Kräften über die im Spikepin ausgebildeten Griffkanten auf Eisflächen, sowei um eine hohe Abriebfestigkeit und eine lange Lebensdauer zu ermöglichen. Die Spikekörper sind üblicherweise aus weniger harten Material, wie beispielsweise weniger hartem Stahl oder aus Aluminium durch Drehen, Kaltfließpressen, Gesenkschmieden oder Sintern aus einheitlicher Materialstruktur hergestellt. Bei Einsatz von Stahl wird zwar eine hohe Abriebfestigkeit ermöglicht, allerdings unter in Kaufnahme eines relativ großen Gewichts. Das große Gewischt begünstigt beim Einsatz auf der Straße, den schnellen Verlust der Spikes und eine zusätzliche Belastung des Straßenbelages. Aluminium ermöglicht zwar den Spikekörper mit geringeren Gewicht auszubilden, allerdings zu Lasten der Abriebfestigkeit. Kombinationen aus mehreren Materialien sind nur schwer realisierbar und benötigen zu deren Herstellung darüber hinaus sehr aufwendige Herstellungsverfahren und teure Werkzeuge.

Die herkömmlichen Spikes mit Spikekörper und mit darin eingesetztem Spikepin sind somit üblicherweise aus einem Spikepin aus schwerem Hartmetall und aus einem Spikekörper mit einem leichteren Metall ausgebildet. Das Hartmetall des Spikepins ermöglicht aufgrund seiner hohen Abriebfestigkeit eine gute Kraftübertragung auf Eis und eine ausreichende Lebensdauer. Aufgrund des zunehmenden Abriebes über die Lebensdauer wird dabei nicht nur der Spikepin abgerieben, sondern auch das den Spikepin umgebende Spikekörpermaterial wird etwas schneller abgerieben. Durch diesen Nachschneideeffekt kann auch bei abgeriebener Spitze des Spikepins die Spitze noch relativ lange eine Spikegriffwirkung entfalten.

Gelegentlich wurde auch vorgeschlagen, einen Spike einstückig aus lediglich einem Material herzustellen. Entweder wird dabei das Material für die mit der Eisfläche in Kontakt tretende Spitze optimiert aus Metallen mit hoher Abriebfestigkeit gewählt, wodurch der Spike insgesamt üblicherweise sehr schwer wird. Die Spikes gehen leicht verloren und beschädigen leichter die Straßenoberflächen. Darüber hinaus fehlt aufgrund der über den gesamten Spike in allen Bereichen gleichen Materialeigenschaften auch der Nachschneideeffekt, sodass mit Abrieb der Spikespitze die Griffwirkung vollständig entfällt. Wird das einheitliche Spikematerial aus einem weniger abriebfesten, leichteren metallischen Material gewählt, geht dies zulasten der Griffwirkung im Bereich der Spikepins und führt zu beschleunigten Abrieb der Spikespitze. Der Nachschneideeffekt fehlt auch hier.

Aus der DE 10 2015 217 774.2 ist es bekannt, einen derartigen Spike aus einheitlichem Material in einem Laserschmelzverfahren durch Umschmelzen von Metallpulver herzustellen. Druckschriften DE 21 30 506 A1, DE 10 2013 113043 A1 und JP 2013 082309 A offenbaren auch ein Verfahren zur Herstellung eines Spikes.

Der Erfindung liegt daher die Aufgabe zugrunde, eine größere Gestaltungsfreiheit für die Gestaltung von derartigen Spikes bei hoher Griffwirkung und unter Schonung der Straßenoberfläche zu ermöglichen.

Die Aufgabe wird erfindungsgemäß durch ein Verfahren zur Herstellung eines Spikes für einen Fahrzeugreifen mit einem Spikekörper und mit einem in den Spikekörper eingesetzten Spikepin, gemäß den Merkmalen von Anspruch 1 gelöst, bei dem der Spikekörper zumindest in Abschnitten mit offenporiger gitter- oder skelettförmiger Struktur in einem Laserschmelzverfahren durch Umschmelzen von Metallpulver eines ersten Metalls hergestellt wird, und bei dem der aus einem anderen Metall hergestellte Spikepin danach in den Spikekörper eingesetzt wird.

Durch das Verfahren wird ermöglicht, die Vorteile der Herstellung der Spikes aus Spikekörper und eingesetztem Spikepin, bei denen der Spikepin aus abriebfesterem Metall einerseits und der Spikekörper aus weniger abriebfestem Material ausgebildet ist, beizubehalten. Dabei ermöglicht die Herstellung des Spikekörpers mit zumindest in Abschnitten offenporiger Gitter bzw. Skelettstruktur in einem Laserschmelzverfahren durch Umschmelzen von Metallpulver eine weitere Gewichtsreduktion des Spikekörpers durch die offenporige Gestaltung und somit eine zusätzliche Reduktionen der Belastung der Straßenoberflächen und dies unter Nutzung der großen Vorteile der Griffwirkung der herkömmlichen Ausbildung des Spikepins und der Vorteile der langlebigen Griffwirkung aus unterschiedlichem Material für Spikepin und Spikekörper. Dabei können auch Metalle für den Spikekörper eingesetzt werden, die bislang aufgrund ihres zu hohen Gewichtes oder ihrer schlechten Bearbeitbarkeit in herkömmlichen Herstellverfahren nicht zum Einsatz kamen. Darüber hinaus kann die für die Halterung und Dämpfung des Spikes im Spikeloch wesentliche Formgestaltung des Spikekörpers individuell zum jeweils gewünschten Zwecke optimiert ausgebildet werden.

Besonders vorteilhaft ist das Verfahren gemäß den Merkmalen von Anspruch 2, bei dem zur Vervollständigung des Spikekörpers nach dem Aufbau der zumindest in Abschnitten mit offenporiger gitter- oder skelettförmiger Struktur im Laserschmelzverfahren durch Umschmelzen von Metallpulver eines ersten Metalls die gitter- oder skelettförmigen Struktur zumindest im Bereich der offenporigen Abschnitte mit Kunsstoff- oder Gummimaterial umspritzt wird. Hierdurch kann in einfacher Weise eine optimierte gewünschte Körpergeometrie des Spikekörpers vervollständigt und eine optimierte Einbettung des Spikekörpers in die umgebende Gummimatrix des Reifens ermöglicht werden. Dabei kann die Oberfläche des Spikekörpers, der mit der umgebenden Gummimatrix im Reifen in Kontakt steht, vergrößert ausgebildet und somit größere Haltekräfte übertragen werden. Der Halt der Spikes im Reifen kann somit verbessert werden. Darüber hinaus kann durch die hierdurch erzielte Füllung der offenporigen Abschnitte ein unerwünschtes Eindringen von Steinen und Sand in die gitter- bzw. skelettförmige Struktur im Betrieb zuverlässig verhindert werden. Beschädigungen des Spikes und vorzeitiger Spikepin- oder Spikeverlust kann somit noch besser verhindert werden. Darüber hinaus können auch Kunststoff- oder Gummi-Materialien mit geringerer Zug- oder Druckfestigkeit zur Herstellung des Spikes genutzt werden, da das Material durch die metallene Gitter- bzw. Skelettstruktur ausreichend gestützt und stabilisiert wird. Somit sind deutlich mehr Freiheiten zur Konstruktion und Umsetzung von Spikes und Spikereifen möglich.

Besonders vorteilhaft ist das Verfahren gemäß den Merkmalen von Anspruch 3, bei dem beim Umspritzen die offenen Poren der gitter- oder skelettförmigen Struktur zumindest teilweise - insbesondere vollständig - mit Kunststoff- oder Gummimaterial gefüllt werden. Durch die Füllung der offenen Poren kann besonders zuverlässig ein unerwünschtes Eindringen von Steinen und Sand in die gitter- bzw. skelettförmige Struktur im Betrieb verhindert werden. Beschädigungen des Spikes und vorzeitiger Spikepin- oder Spikeverlust kann somit noch zuverlässiger verhindert werden. Darüber hinaus können Kunststoff- oder Gummi-Materialien mit geringerer Zug- oder Druckfestigkeit zur Herstellung des Spikes genutzt werden, da das Material durch die metallene Gitter- bzw. Skelettstruktur ausreichend gestützt und stabilisiert wird. Somit sind deutlich mehr Freiheiten zur Konstruktion und Umsetzung von Spikes und Spikereifen möglich. Eine vollständige Füllung und Ummantelung ist besonders vorteilhaft für Anwendungen, bei denen der Spike anschließend mittels eines Haftvermittlers in der umliegenden Gummimatrix des Reifens anvulkanisiert werden soll. Das Haftvermittlersystem muss nach Anwendung dieses Verfahrens nur auf die Materialpaarung aus Kunststoff- oder Gummimaterial des Spikekörpers und aus Gummimatrix des Reifens angepasst werden.

Besonders vorteilhaft ist das Verfahren gemäß den Merkmalen von Anspruch 4, wobei der Spikekörper mit einem Fuß flansch und mit einem Oberteil ausgebildet ist, wobei der Fußflansch mit einer offenporigen gitter- oder skelettförmiger Struktur im Laserschmelzverfahren hergestellt wird. Der Fußflansch ist Spikeabschnitt mit dem üblicherweise größten Durchmesser und kommt beim Abrollen des Reifens nicht mit der Straßenoberfläche in Berührung. Somit kann besonders wirkungsvoll Gewicht des Spikes reduziert werden ohne die Griffeigenschaften des Spikes zu beeinträchtigen.

Besonders vorteilhaft ist das Verfahren gemäß den Merkmalen von Anspruch 5, wobei der gesamte Spikekörper mit Fuß flansch und Oberteil mit einer offenporigen gitter- oder skelettförmiger Struktur im Laserschmelzverfahren hergestellt wird. Dies ermöglicht besonders leichte Ausführungen von Spikes.

Besonders vorteilhaft ist das Verfahren gemäß den Merkmalen von Anspruch 6, wobei die offenporige gitter- oder skelettförmiger Struktur des Spikekörpers zur Vervollständigung des Spikekörpers zunächst mit Kunststoff- oder Gummimaterial umspritzt wird und danach der Spikepin in den vervollständigten Spikekörper eingesetzt wird. Das Verfahren ermöglicht in einfacher Weise auch den Einsatz herkömmlicher zur Erzielung eines Presssitzes konisch zulaufender, nach unten hin verjüngten Spikepins. Somit kann in einfacher Weise auch die konventionelle Technik zum Zusammenbau von Spikepin und Spikekörper eingesetzt werden. Zusätzlicher Aufwand kann somit vermieden werden. Dabei können, soweit es die Elastizität des gewählten Spikekörpermaterials zulässt, auch Spikepins mit Hinterschnitten mit konventioneller Zusammenbautechnik in den Spikekörper eingebracht werden.

Besonders vorteilhaft ist das Verfahren gemäß den Merkmalen von Anspruch 7, wobei in die offenporige gitter- oder skelettförmiger Struktur des Spikekörpers zunächst der Spikepin eingesetzt und danach die offenporige gitter- oder skelettförmiger Struktur des Spikekörpers zur Vervollständigung des Spikekörpers mit Kunststoff- oder Gummimaterial umspritzt wird. Dieses Verfahren ermöglicht auch zusätzliche Optionen für Konstruktion und Herstellung derartiger Spikes, deren Spikekörper Materialien mit geringer Bruchdehnung ausweisen. Darüber hinaus ermöglicht das Verfahren in einfacher Weise die Herstellung von Spikes mit Spikekörpern mit Hinterschnitten, beispielsweise zur Erzielung einer besonders festen Verankerung des Spikepins im Spikekörper.

Besonders vorteilhaft ist die Ausbildung eines Spikes gemäß den Merkmalen von Anspruch 8, wobei der Spike einen Spikekörper und einen darin eingesetzten Spikepin aufweist, wobei der Spikekörper mindestens ein Fußteil und ein Oberteil aufweist. wobei der Spikekörper zumindest in Abschnitten mit offenporiger gitter- oder skelettförmiger Struktur aus einem ersten Metall ausgebildet ist, und wobei der Spikepin aus einem anderen Metall ausgebildet ist. Dies ermöglicht eine entsprechend den unterschiedlichen Erfordernissen an Spikepin und Spikekörper im Betrieb individuell optimierte Ausbildung. Die Praxis hat gezeigt, dass Spikes, die eine ausreichende Spikegriffwirkung über die Lebensdauer aufweisen sollen, sinnvollerweise aus einem harten, besonders abriebfesten Spikepin und einem weicheren Spikekörper ausgebildet sind. Das Verfahren ermöglicht weiterhin den Einsatz von hartem, abriebfestem Material für den Spikepin. Für die Herstellung der gitter- oder skelettförmigen Struktur kann bei diesem Verfahren ein lediglich zur Erzielung des Haltes gut geeignetes Metall eingesetzt werden. Das Verfahren ermöglicht es, in einfacher Weise das Spikegewicht und damit Straßenbeschädigungen durch Ersatz von schwerem Metall im Spikekörper durch leichteres Kunststoff oder Gummimaterial zu reduzieren jedoch ohne auf gute, langlebige Spikegriffwirkung und somit auf gute, langlebige Winterperformance zu verzichten.

Die Erfindung wird im Folgenden an Hand der in den Figuren 1 bis 14 dargestellten Ausführungsbeispiele näher erläutert. Hierin zeigen
Fig. 1 mit den Fig.1a bis 1d eine schematische Darstellung eines herkömmlichen Spikes mit Spikekörper und Spikepin, wobei
Fig.1a den Spike in Seitenansicht,
Fig.1b den Spike in Schnittdarstellung gemäß Schnitt Ib-Ib von Fig.1a,
Fig.1c den Spike in Draufsicht gemäß Ansicht Ic-Ic von Fig.1a und
Fig.1d den Spike in Draufsicht gemäß Ansicht Id-Id von Fig.1a zeigt,
Fig.2 mit den Fig.2a bis 2d eine schematische Darstellung eines im Laserschmelzverfahren hergestellten Gerippes eines Spikekörpers, wobei
Fig.2a das Gerippe in Seitenansicht,
Fig.2b das Gerippe in Schnittdarstellung gemäß Schnitt IIb-IIb von Fig.2a,
Fig.2c das Gerippe in Draufsicht gemäß Ansicht IIc-IIc von Fig.2a und
Fig.2d das Gerippe in Draufsicht gemäß Ansicht IId-IId von Fig 2a zeigt,
Fig.3 mit den Fig.3a bis 3d das Gerippe von Fig.2 mit eingesetztem Spikepin, wobei
Fig.3a das Gerippe in Seitenansicht,
Fig.3b das Gerippe in Schnittdarstellung gemäß Schnitt IIIb-IIIb von Fig.3a,
Fig.3c das Gerippe in Draufsicht gemäß Ansicht IIIc-IIIc von Fig.3a und
Fig.3d das Gerippe in Draufsicht gemäß Ansicht IIId-IIId von Fig.3a zeigt,
Fig.4 mit den Fig.4a bis 4g den fertiggestellten Spike mit umspritztem und gefülltem Gerippe von Fig.3, wobei
Fig.4a den Spike in Draufsicht,
Fig.4b den Spike in Schnittdarstellung gemäß Schnitt IVb-IVb von Fig.4a,
Fig.4c den Spike in Draufsicht gemäß Ansicht IVc-IVc von Fig.4a,
Fig.4d den Spike in Draufsicht gemäß Ansicht IVd-IVd von Fig.4a,
Fig.4e den Spike in Schnittdarstellung gemäß SchnittIVe-IVe von Fig.4c,
Fig.4f den Spike in Seitenansicht analog zur Darstellung von Fig.4a, jedoch mit durchscheinend dargestellter Struktur des Gerippes und
Fig.4g den Spike in Schnittdarstellung gemäß Schnitt IVg-IVg der Fig.4f zeigt,
Fig.5 mit den Fig.5a bis 5d eine schematische zur Erläuterung des Ablaufs der Herstellung des Gerippes des Spikekörpers im Laserschmelzverfahren, wobei
Fig.5b die Schnittdarstellung gemäß Schnitt Vb-Vb von Fig.5a und
Fig.5c die Draufsicht gemäß Ansicht Vc-Vc von Fig.5a zeigt,
Fig.6 mit den Fig.6a bis 6f die Darstellung einer alternativen Ausbildung eines im Laserschmelzverfahrens erzeugten Gerippes, wobei
Fig.6a das Gerippe in Draufsicht,
Fig.6b das Gerippe in Schnittdarstellung gemäß Schnitt VIb-VIb von Fig.6a,
Fig.6c das Gerippe in Draufsicht gemäß Ansicht VIc-VIc von Fig.6b,
Fig.6d das Gerippe in Schnittdarstellung gemäß Schnitt VId-VId von Fig.6c,
Fig.6e das Gerippe in Draufsicht gemäß Ansicht VIe-VIe von Fig.6b und
Fig.6f das Gerippe in perspektivischer Darstellung zeigt,
Fig. 7 mit den Fig.7a bis 7f analog zu den Darstellungen der Fig.6a bis 6f die Darstellung des Gerippes von Fig.6 jedoch mit eingesetztem Spikepin,
Fig. 8 mit den Fig.8a bis 8f analog zu den Darstellungen der Fig.7a bis 7f die Darstellung des mit durch Umspritzen und Ausfüllen der Hohlräume des Gerippes von Fig.7 fertiggestellten Spikes,
Fig. 9 mit den Fig.9a bis 9e eine Darstellung einer Spritzform zur Erläuterung des Prozesses des Ummantelns bzw. Füllens des Gerippes in der Spritzform, wobei
Fig.9a die Spritzform im geöffneten Zustand in Seitenansicht,
Fig.9b die Form in Schnittdarstellung gemäß Schnitt IXb-IXb von Fig.9a,
Fig.9c die Form in Seitenansicht gemäß Ansicht IXc-IXc von Fig.9a,
Fig.9d die Form in Draufsicht gemäß Ansicht IXd-IXd von Fig.9a und
Fig.9e die Form in Draufsicht gemäß Ansicht IXe-IXe von Fig. 9a zeigt,
Fig. 10 mit den Fig.10a bis 10e eine Darstellung der Spritzform von Fig.9 zur Erläuterung des Prozesses des Ummantelns bzw. Füllens des Gerippes in der Spritzform, wobei Fig. 10 die Form in teilweise geschlossenen Zustand zeigt, wobei die Fig.10a bis 10e die Form in analoger Darstellung zu den Fig.9a bis 9e zeigen,
Fig.11 mit den Fig.11a bis 11e eine Darstellung der Spritzform von Fig.9 zur Erläuterung des Prozesses des Ummantelns bzw. Füllens des Gerippes in der Spritzform, wobei Fig.11 die Form in teilweise geschlossenen Zustand mit eingesetztem Gerippe zeigt und die Fig.11a bis 11e die Form in analoger Darstellung zu den Fig.9a bis 9e zeigen,
Fig.12 mit den Fig.12a bis 12e eine Darstellung der Spritzform von Fig.9 zur Erläuterung des Prozesses des Ummantelns bzw. Füllens des Gerippes in der Spritzform, wobei Fig.12 die Form in geschlossenen Zustand mit eingesetztem Gerippe zeigt und die Fig.12a bis 12e die Form in analoger Darstellung zu den Fig.9a bis 9e zeigen,
Fig.13 mit den Fig.13a bis 13e eine Darstellung der Spritzform von Fig.9 zur Erläuterung des Prozesses des Ummantelns bzw. Füllens des Gerippes in der Spritzform, wobei Fig.13 die Form im gefüllten Zustand zeigt und die Fig.13a bis 13e die Form in analoger Darstellung zu den Fig.9a bis 9e zeigen, und
Fig. 14 einen Umfangsabschnitt eines Fahrzeugluftreifens in Draufsicht mit erfindungsgemäß ausgebildeten Spikes.

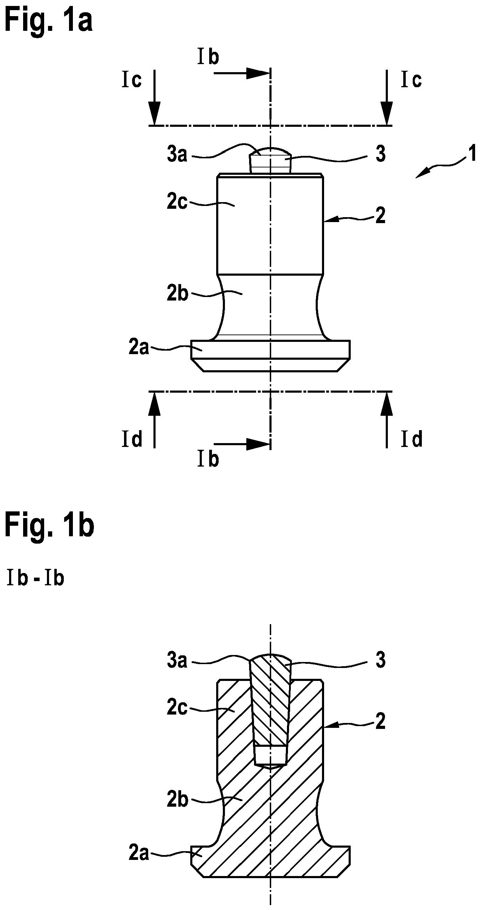

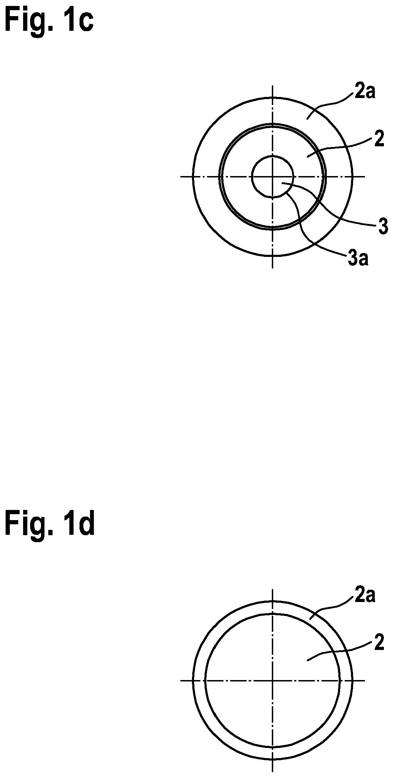

Fig. 1 zeigt die schematische Ausbildung eines Spikes 1 mit Spikekörper 2 und mit einem in den Spikekörper 2 eingesetzten Spikepin 3. Der Spikekörper 2 ist - wie in Fig.1 zu erkennen ist - längs der axialen Erstreckung von unten nach oben mit einem breiten Spikefuß 2a und mit einem rotationssymmetrischen Spikeoberteils 2c ausgebildet. Zwischen dem im rotationssymmetrischen Spikefuß 2a, dessen Außendurchmesser größer ist als der Außendurchmesser des Spikeoberteils, ist in bekannter Weise ein rotationssymmetrisches, tailliertes Mittelteil 2b ausgebildet. Der Spike 1 ist an seiner das Spikeoberteil 2c nach oben begrenzenden Stirnfläche mit einer Aufnahmeöffnung ausgebildet, in welche ein in herkömmlicher Weise konisch ausgebildeter Spikepin 3 eingepresst ist. Der Spikepin 3 ist in Achsrichtung des Spikes nach oben hin von einer zum Abrollen ausgebildeten kuppelförmigen Erhebung begrenzt und bildet zwischen der konischen Fläche und der kuppelförmigen Erhebung eine umlaufend um den Spikepin 3 erstreckt ausgebildete Griffkante 3a oberhalb des Spikekörpers 2. Der Spikefuß 2a, das Mittenteil 2b und der Spikeoberteil 2c sind längs ihrer Erstreckung in den Schnittebenen senkrecht zur Spikeerstreckungsachse mit kreisförmiger, ovaler oder elliptischer Querschnittskontur ausgebildet.

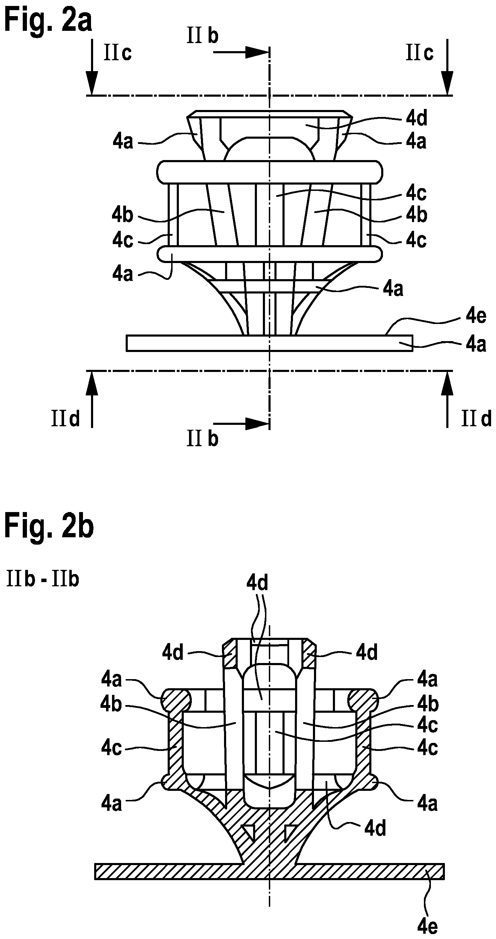

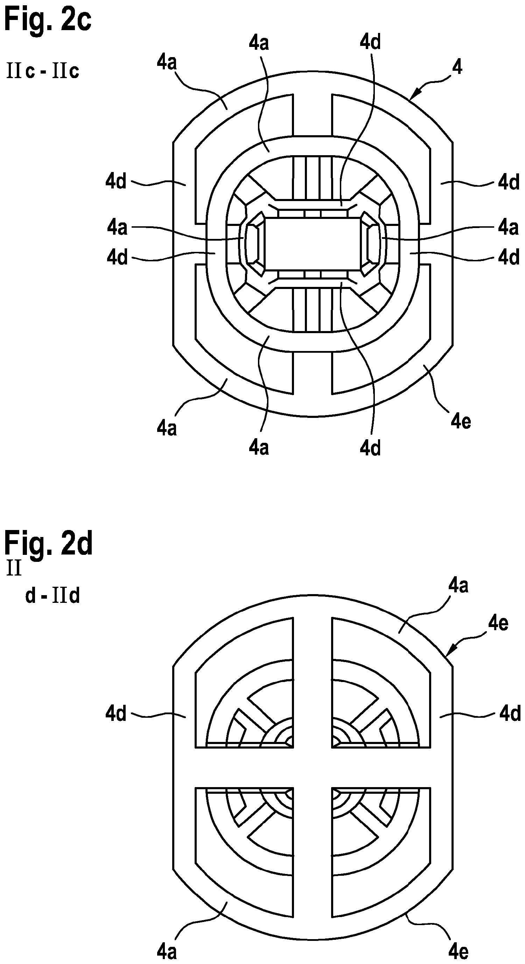

Der Spikekörper ist - wie in den Fig.2, Fig.3 und Fig.4 dargestellt ist - aus einem käfigförmigen Gerippe 4 aus Metall ausgebildet. Das Metall ist eine bekannte Stahl-, Titan-, Aluminium-Legierung oder eine andere, bekannte geeignete Legierung, die einen hohen E-Modul von E > 40GPa aufweist und im Sinter-Laser-Melting-Verfahren (SLM-Verfahren) bearbeitbar ist. Das käfigförmige Gerippe 4 ist aus miteinander verbundenen, gekrümmten Gerippeabschnitten 4a und gradlinigen Gerippeabschnitten 4b, 4c und 4d ausgebildet. Die Gerippeabschnitte 4b und 4c erstrecken sich im Wesentlichen längs der Erstreckungsachse des Spikes 1. Die Gerippeabschnitte 4a und 4d erstrecken sich in senkrecht zur Längserstreckungsachse des Spikes 1 ausgebildeten Ebenen. Dabei sind jeweils zwei Gerippeabschnitte 4a an ihren Erstreckungsenden durch einen Gerippeabschnitt 4d miteinander verbunden. Zwei Gerippeabschnitte 4a und zwei Gerippeabschnitte 4d bilden dabei ein ringförmig um die Erstreckungsachse des Spikes 1 erstrecktes Gebilde. Auf diese Weise sind längs der Erstreckung des Spikes 1 in mehreren senkrecht zur Erstreckungsrichtung des Spikes 1 ausgebildeten Ebenen jeweils derartige aus Gerippeabschnitten 4a und 4d gebildete ringförmige um die Spikeachse erstreckte Abschnitte des Gerippes 4 ausgebildet, welche durch die Abschnitte 4c in Erstreckungsrichtung des Spikes 1 miteinander verbunden werden. Im unteren Abschnitt des Spikes ist dabei ein einzelner großer Ring 4e ausgebildet, dessen Gerippeabschnitte 4a zusätzlich durch eine parallel zu den Streben 4d ausgebildete Strebe verbunden sind. Darüber hinaus sind in dieser Ebene (Ringebene) des Rings 4e auch die Streben 4d durch eine weitere Strebe - wie in Fig.2d zu erkennen ist - mittig miteinander verbunden. Im Ring 4e bilden somit die beiden zusätzlichen Streben eine kreuzförmige Ausbildung.

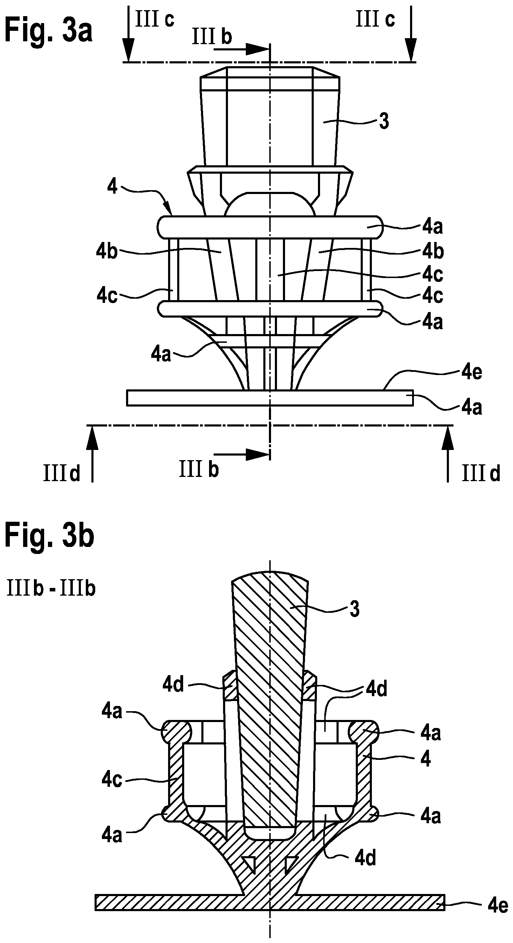

Diese käfigförmige Struktur des Gerippes 4 ist dabei in ihren oberhalb der kreuzförmig versteiften, unteren Ebene des Rings 4e angeordneten, verschiedenen ringförmigen Ebenen mit derartigen Ringdurchmessern ausgebildet, dass - wie in Fig.3a bis Fig.3d zu erkennen ist - ein in herkömmlicher Weise aus Hartmetall hergestellter Spikepin 3 konzentrisch zu den Ringen durch diese Ringe hindurch in das Gerippe 4 eingefügt werden kann und unter klemmendem Berührkontakt zwischen den Streben 4b befestigt wird.

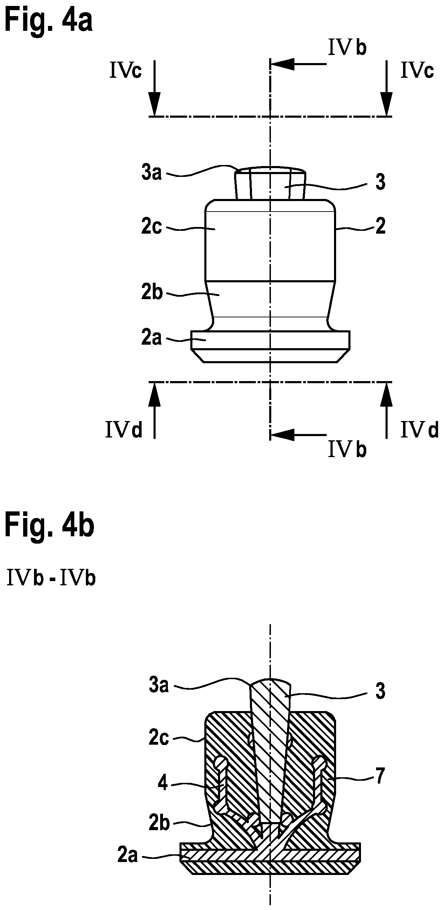

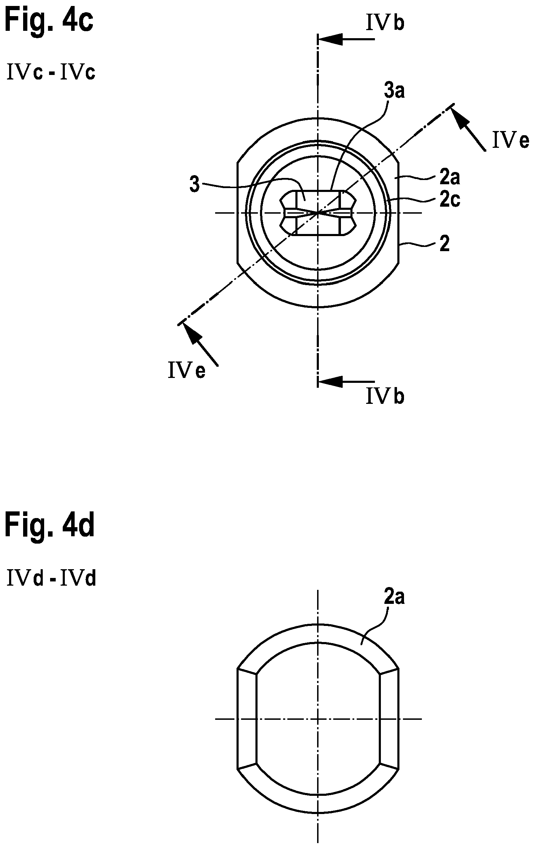

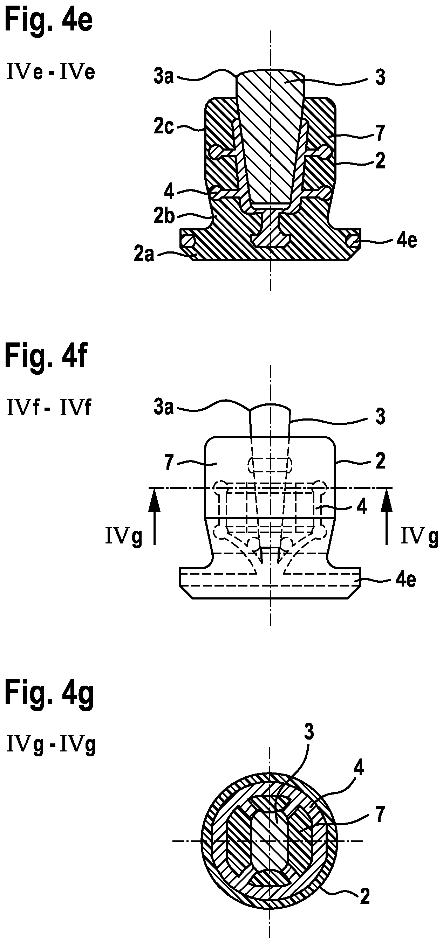

Im Anschluss daran wird - wie in den Fig.4a bis 4g der Fig.4 dargestellt ist - das Gerippe 4 mit bekanntem Kunststoff oder Gummimaterial 7 umspritzt und dabei die im Gerippe ausgebildeten Hohlräume mit dem Kunststoff bzw. Gummimaterial 7 vollständig gefüllt. Beim Umspritzen wird die Außenkontur des Spikekörpers 2 ausgeformt. Diese entspricht der Form des gewünschten Spikekörpers 2 - wie er beispielsweise in den Fig.1a bis 1d dargestellt ist. Der Spike 1 ist auf diese Weise fertig gestellt.

Wie in den Fig. 2bis 4 dargestellt ist, ist in einer Ausführung das Fußteil 2a des Spikekörpers an zwei gegenüberliegenden Seiten abgeflacht ausgebildet.

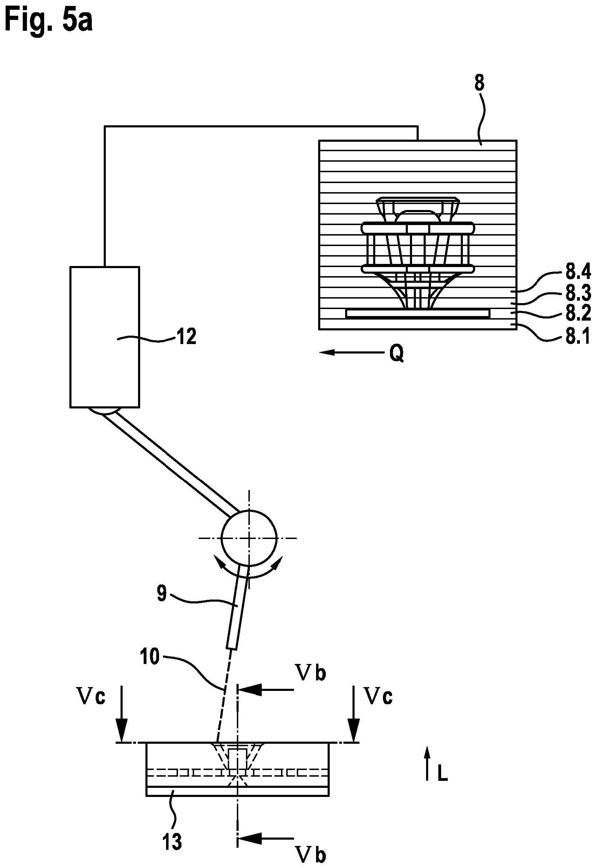

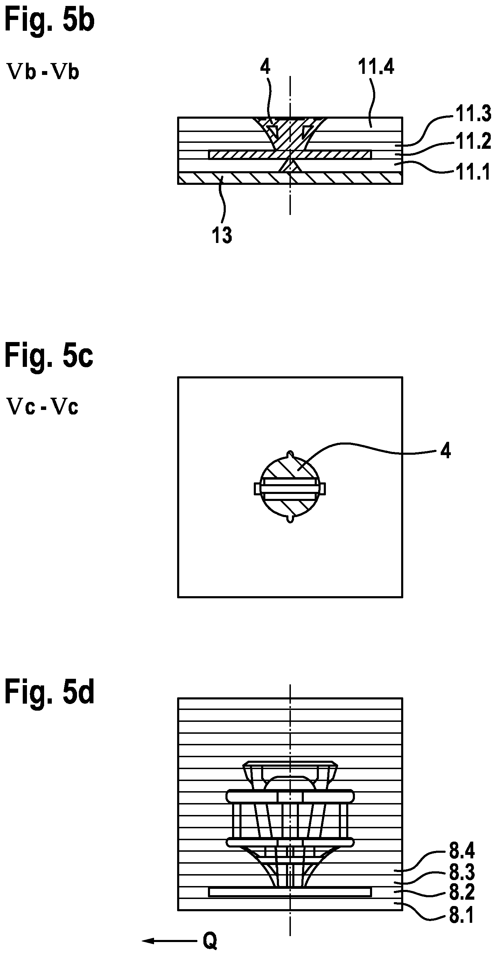

In Fig.5a bis 5d ist das Herstellungsverfahren für das Gerippe 4 dargestellt. Danach wird das Gerippe 4 in einem Laserschmelzverfahren (selective laser melting-SLM) schichtweise aufgebaut. Dazu wird zunächst ein CAD-Modell 8 bereitgestellt, beispielsweise durch entsprechendes Einlesen einer dreidimensionalen Gerippegeometrie in eine Verarbeitungseinheit 12. Die Verarbeitungseinheit 12 unterteilt das CAD-Modell 8 - beispielsweise mit einer Software - in mehrere übereinanderliegende CAD-Schichten 8.i, mit i=1, 2,..., in den das CAD-Modell 8 beispielsweise in einer Querrichtung Q, d. h. horizontal in mehrere Schichten zerschnitten wird.

Zum Herstellen der vorab eingelesenen Gerippegeometrie steuert die Verarbeitungseinheit 12 einen Laser 9 derartig, dass ein Laserstrahl 10 des Lasers 9 auf eine Materialschicht 11.i, i =1,2,.. fokussiert wird, wobei der Laserstrahl 10 auf beliebige Positionen auf der Materialschicht 11.i fokussiert werden kann.

Die Materialschichten 11.i werden dazu aus einem pulverförmigen metallischen Material, beispielsweise eine Stahl-, Titan-, Aluminium-Legierung oder eine andere geeignete Legierung bereitgestellt. Das pulverförmige Material wird in dem Herstellungsverfahren schichtweise auf eine Plattform 13 aufgebracht, d. h. als eine erste Materialschicht 11.1 wird das pulverförmige Material beispielsweise direkt auf die Plattform 13 aufgebracht. Die zweite Materialschicht 11.2 liegt auf der ersten Materialschicht 11.1, die dritte Materialschicht 11.3 auf der zweiten Materialschicht 11.2, alle weiteren Materialschichten 11.i folgen sukzessive. Nachdem eine Materialschicht 11.i aufgebracht wurde, wird zunächst der Laserstrahl 10 auf vorher definierte Positionen auf die Materialschicht 11.i fokussiert, wobei sich die zu fokussierenden Positionen nach den CAD-Schichten 8.i richten. Für die erste Materialschicht 11.1 ist demnach die erste CAD-Schicht 8.1 relevant, usw.

Wird der Laserstrahl 10 auf eine Position auf der entsprechenden Materialschicht 11.i fokussiert, so wird das pulverförmige Material an dieser Position umgeschmolzen. Wird der Laserstrahl 10 an die nächste Position gefahren, kühlt das umgeschmolzene Material ab und verfestigt sich dadurch. Somit kann durch Anfahren mehrerer Positionen auf eine Materialschicht 11.i ein verfestigtes, geometrisches Objekt in der jeweiligen pulverförmigen Materialschicht geformt werden, wobei das geometrische Objekt der Geometrie der jeweiligen CAD-Schicht 8.i entspricht. Ist die entsprechende CAD-Schicht 8.i in der Materialschicht 11.i geformt, so wird die nächste pulverförmige Materialschicht 11.i aufgebracht und in diese die entsprechend nächste CAD-Schicht 8.i geformt. Somit kann durch sukzessives Aufbringen und Bearbeiten der Materialschichten 11.i ein einteiliges Gerippe 4 ausgebildet werden, der dem vorher eingelesenen CAD-Modell 8 entspricht. Das einteilige Gerippe 4 wird von den umgebenen nicht verschmolzenen metallischen Pulvers, beispielsweise durch Ausblasen des Pulvers befreit und entspricht dem in den Fig.2a bis 2d dargestellten und beschriebenen Gerippe 4.

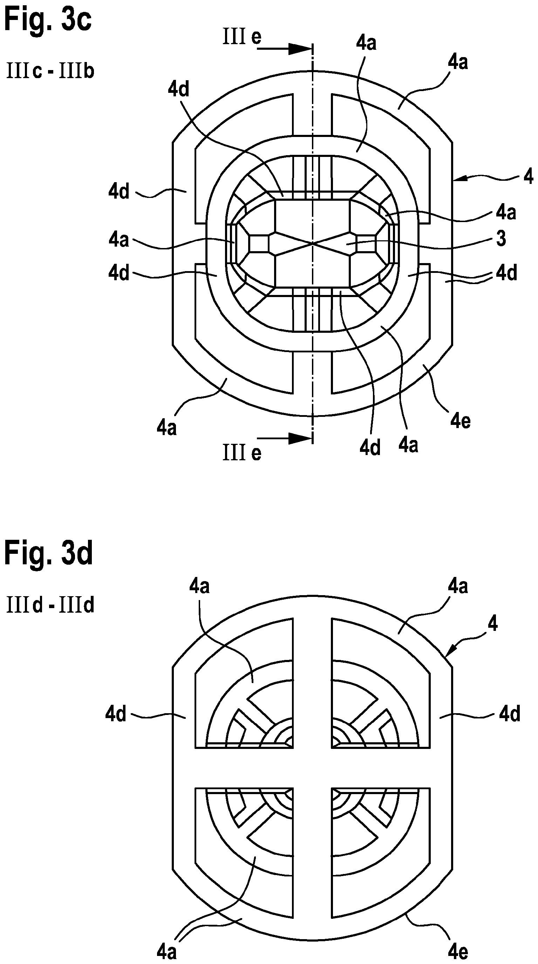

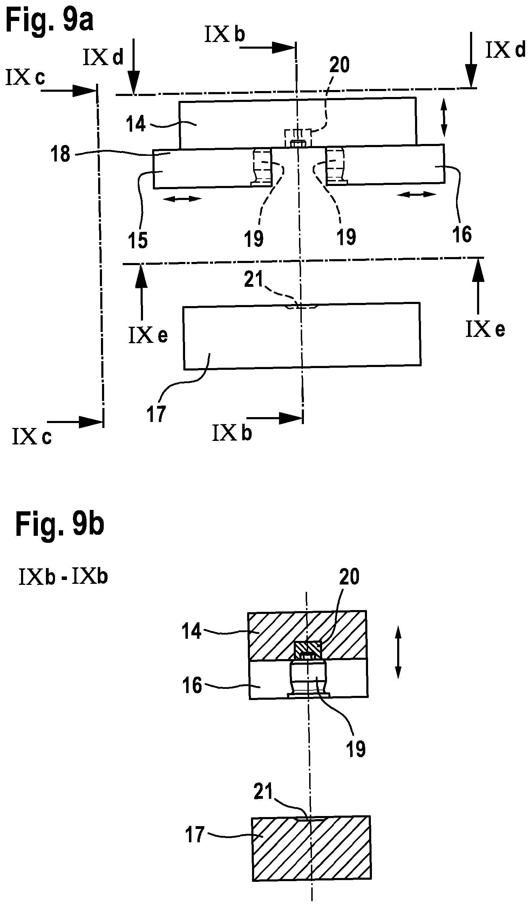

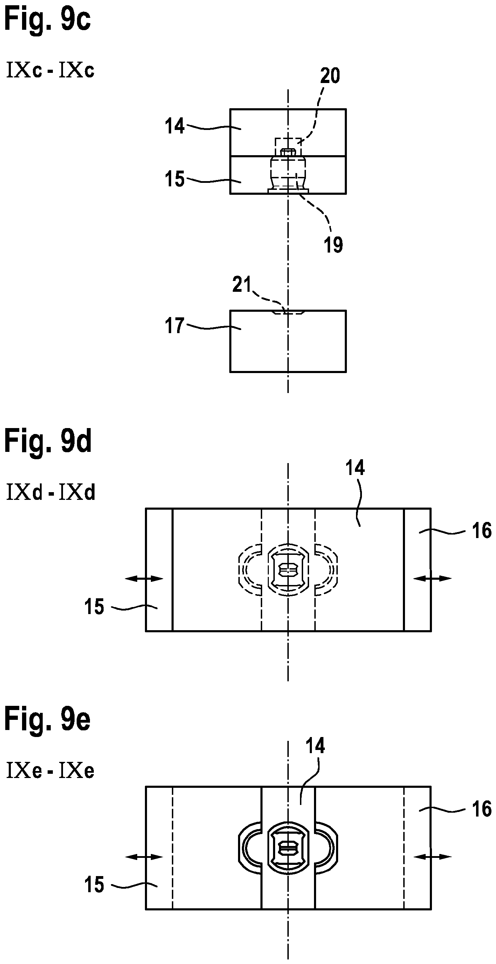

In den Fig.9 bis 13 sind die verschiedenen, nacheinander folgenden Schritte zur Ummantelung und Füllung des mit Spikepin 2 bestückten Gerippes 4 von Fig.3 mithilfe von Kautschuk oder Kunststoffmaterial zur Erzeugung der in den Fig.4 dargestellten Spikes 1 schematisch dargestellt.

Diese Ummantelung und Füllung sowie Ausformung der Spikekörperkontur erfolgt dabei beispielsweise in einer Formmulde bekannter Art mit Oberschale 14 und Unterschale 17, welche - wie in Fig.9a dargestellt ist - in Spikeerstreckungsrichtung übereinander positioniert sind. Die Oberschale 14 kann gesteuert von der Unterschale 21 durch Anheben entfernt und durch Absenken auf diese zubewegt werden. An der zur Unterschale 17 weisenden Stirnfläche der Oberschale 14 sind Seitenschalen 15 und 16 in bekannter Weise aufeinander zu und voneinander weg bewegbar gelagert. In der Oberschale 14 ist auf deren Unterseite eine Form 20 zur Aufnahme und Befestigung der Spitze des Spikepins ausgebildet. In den beiden Formschalen 15 und 16 ist korrespondierend zur Position mit der Form 20 jeweils einer Formhälfte 19 und in der Unterschale 17 in korrespondierender Position eine Form 21 ausgebildet.

In geschlossenem Zustand der Formmulde, in welchem die Seitenschalen 15 und 16 in ihre Ausformposition bis in Berührkontakt aufeinander zubewegt und die Oberschale 14 nach unten auf die Unterschale 17 abgesenkt ist, bilden die Formen 19 und 20 die Oberflächenkontur des Spikekörpers 2a unterhalb der Spikespitze die Form 21 die Oberflächenkontur der vom Spike 1 weisenden Stirnfläche des Spikefußes 2a.

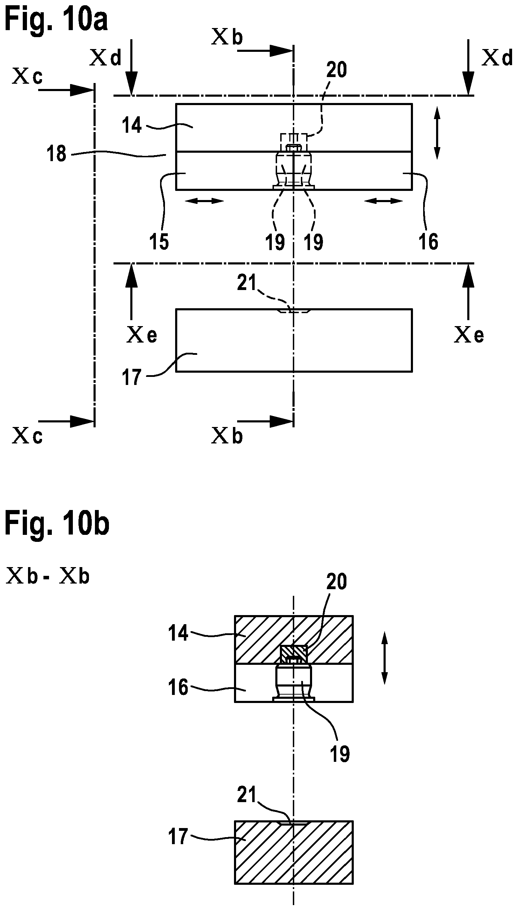

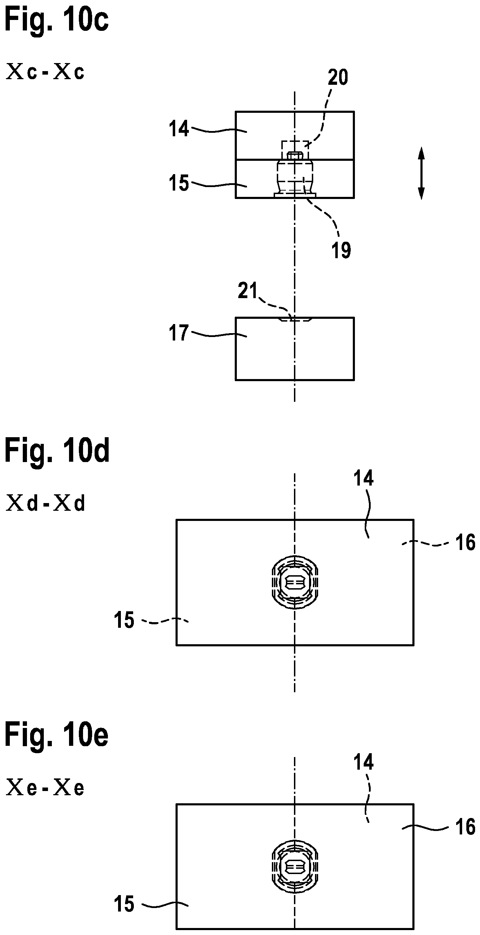

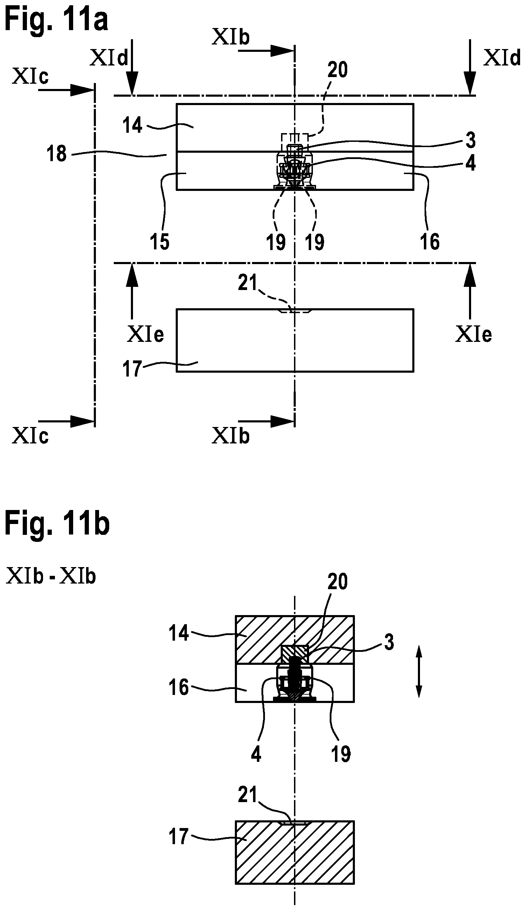

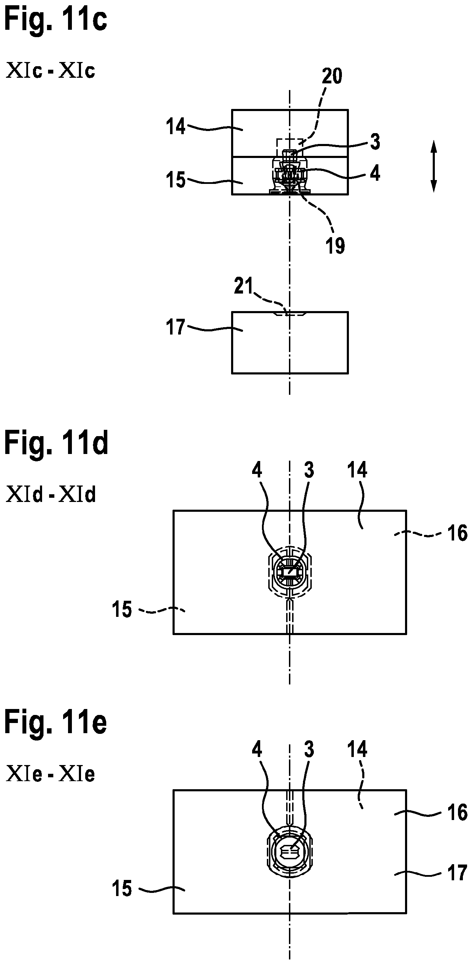

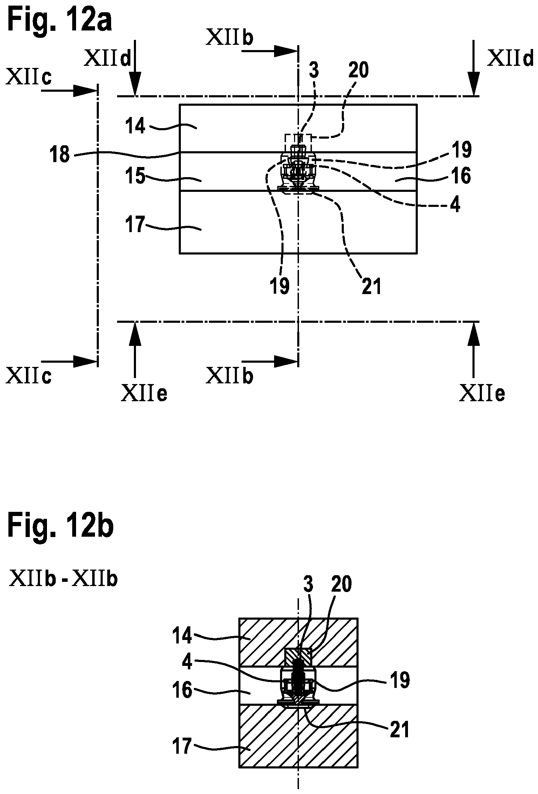

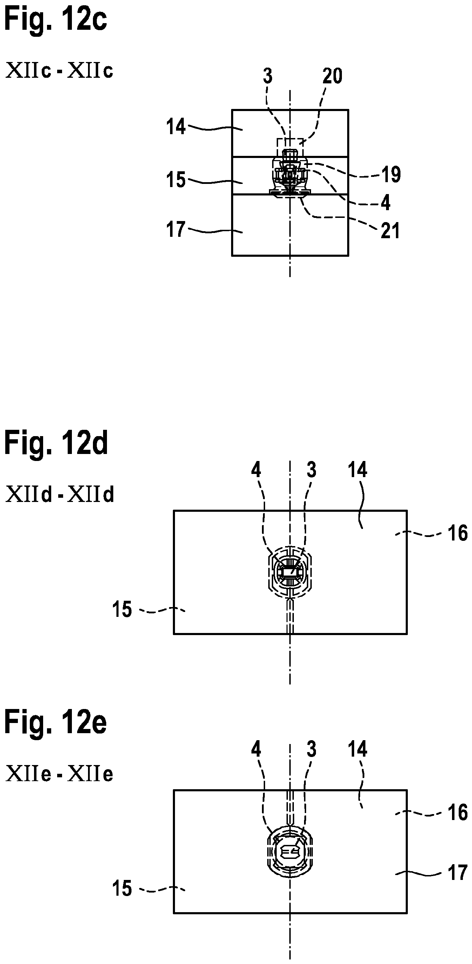

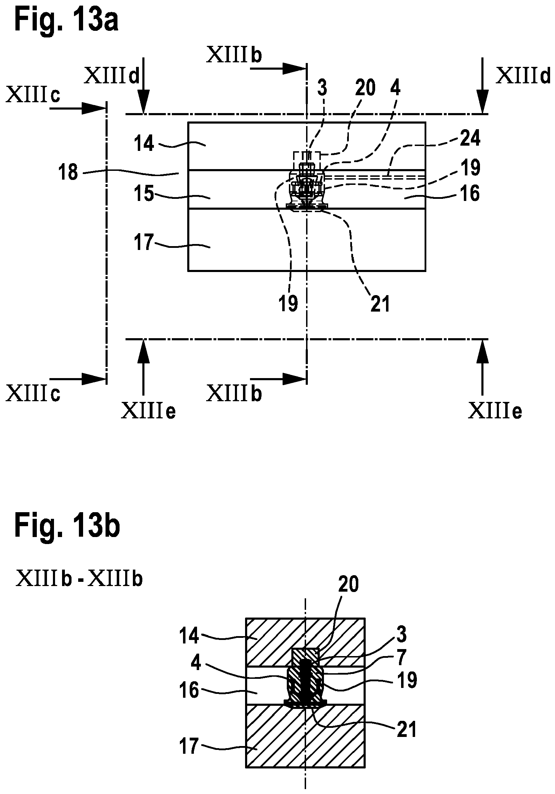

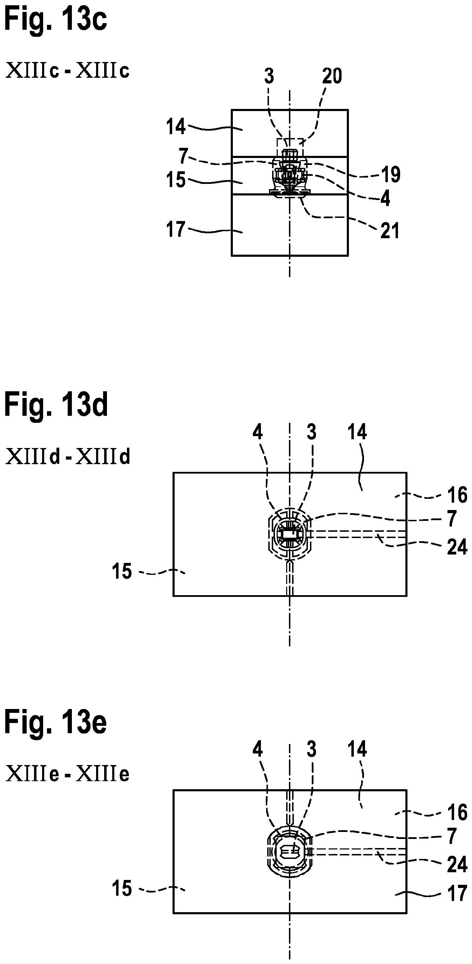

Die Fig.9a bis 9e zeigen die Formmulde in offenem und noch ungefülltem Zustand. Zur Herstellung werden die beiden Seitenschalen 15 und 16 gesteuert aufeinander zubewegt und geschlossen. Die Fig.10a bis 10e zeigen die Formmulde in diesem teilweise geschlossenen Zustand, aber noch ohne eingesetztes, mit Spikepin 3 bestücktes Gerippe 4. Zur Herstellung wird dann das gemäß Fig.3 mit Spikepin 3 bestückte Gerippe 4 mit der Spitze 3a des Spikepins 3 in der Form 20 konzentrisch zur Formachse befestigt. Dieser Zustand ist in den Fig. 11a bis 11e dargestellt. Anschließend wird die Oberschale 14 gesteuert soweit abgesenkt, bis sie in Berührkontakt zur Unterschale 17 kommt und die Formmulde somit geschlossen ist. Dieser Zustand ist in den Fig.12a bis 12e dargestellt. Im Anschluss daran wird - beispielsweise mithilfe von in der Formmulde ausgebildeten Einspritzkanälen 24 - in bekannter Weise - plastisch verformbares Kunststoff- oder Kautschukmaterial in die zwischen den Formen 19,20 und 22 gebildeten Hohlraum eingespritzt. Dabei werden das Gerippe 4 und der Spikepin 3 innerhalb des Hohlraums der Formmulde vollständig von dem eingespritzten Material ummantelt und alle im Gerippe 4 gebildeten Hohlräume ausgefüllt. Dieser Zustand ist in den Fig. 13a bis 13e dargestellt. Dabei ist beispielhaft in einer Seitenschale16 ein Einspritzkanal 24 eingezeichnet.

In bekannter Weise wird das eingespritzte Kunststoff- bzw. Kautschukmaterial verfestigt. Dies erfolgt beispielsweise durch Abkühlen des Kunststoffmaterials oder durch Vulkanisation des eingespritzten Kautschukmaterials.

Nach gesteuertes Öffnen der Form durch Anheben der Oberschale 14 und anschließendes seitliches Entfernen der Seitenschalen 15 und 16 kann der Spike 1 aus der Form 20 gelöst und zum Einsatz im Fahrzeugluftreifen bereitgestellt werden.

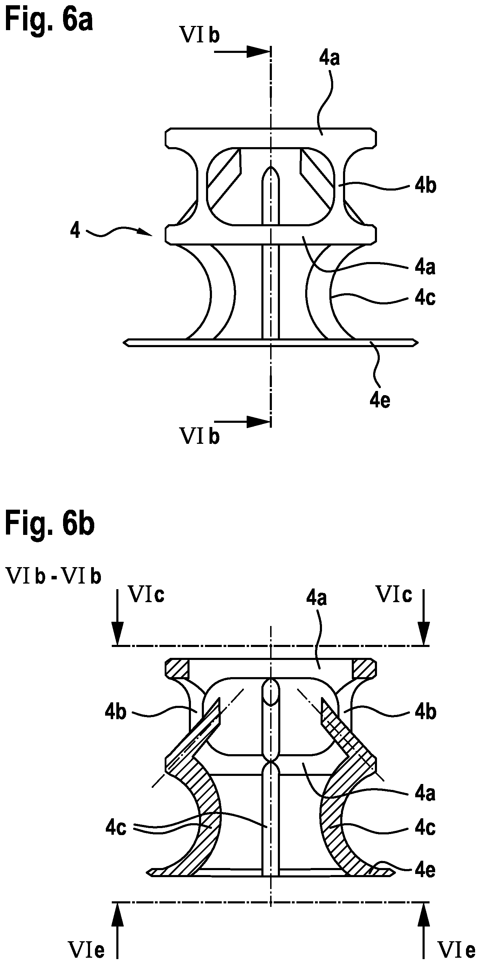

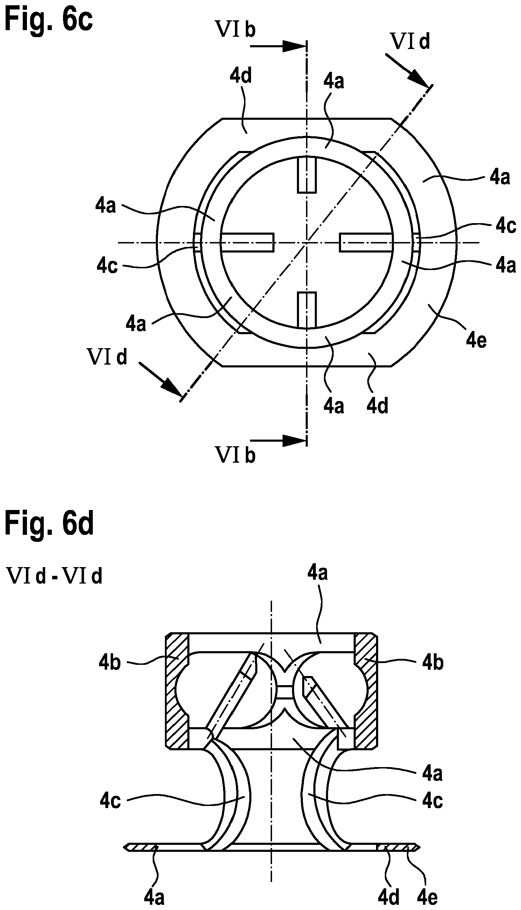

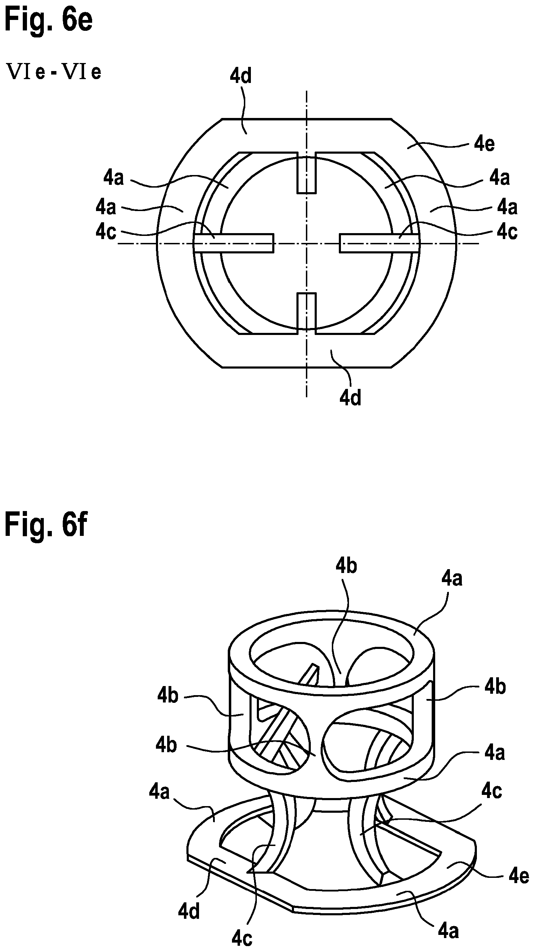

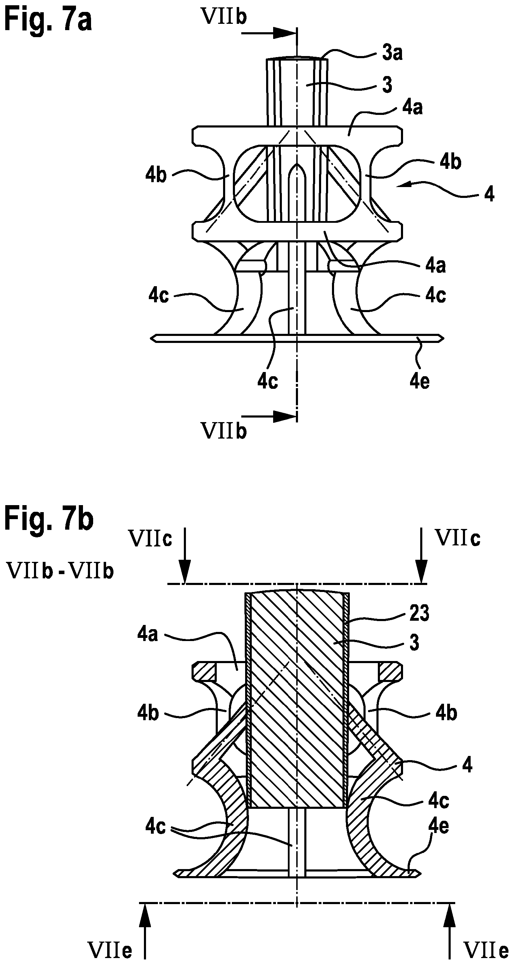

Die Fig. 6a bis 6f zeigen ein Gerippe 4, welches analog zu dem in den Fig.2a bis 2d dargestellten Gerippe 4 ausgebildet jedoch mit einer etwas abweichenden, gitterförmigen Struktur versehen ist. So sind beispielsweise zwischen unterer Ebene 4e und einer mittleren Ebene in Spikeerstreckungsrichtung Streben 4c ausgebildet, welche längs ihrer Erstreckung konkav gekrümmt sind. Auch bei diesem Gerippe 4 wird durch die in verschiedenen Ebenen durch Streben gebildete Ringe, die zwischen den Ebenen durch Streben verbunden sind, der Spikepin 3 eingeführt und befestigt, wie in den Fig.7a bis 7f dargestellt ist.

In den Fig.7a bis 7f ist auch eine weitere alternative Ausführung des Spikepins 3 dargestellt, bei welcher der Spikepin 3 zusätzlich vorab mit einer dünnen Schicht 23 ummantelt ist. Die Schicht 23 ist beispielsweise ein Überzug aus Zinn zur besseren Anbindung an das Kunststoffmaterial des Spikekörpers 2.

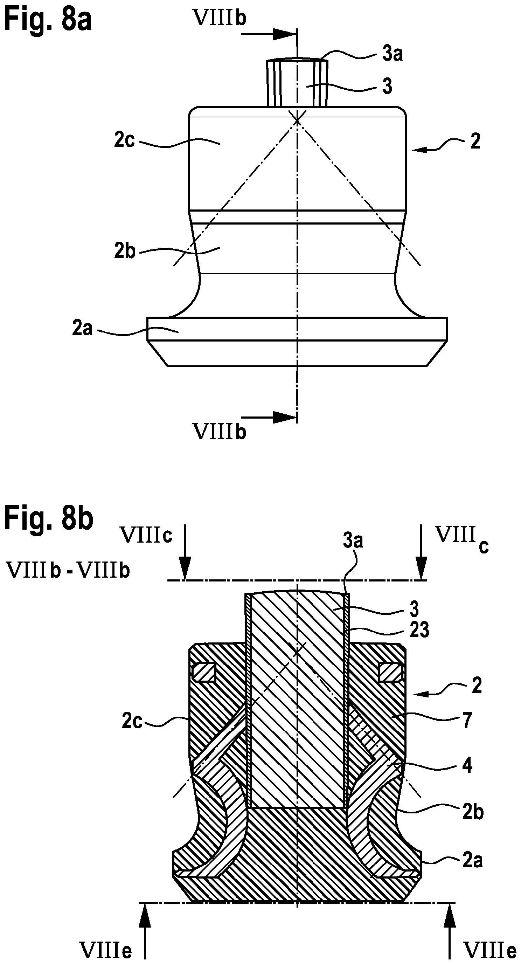

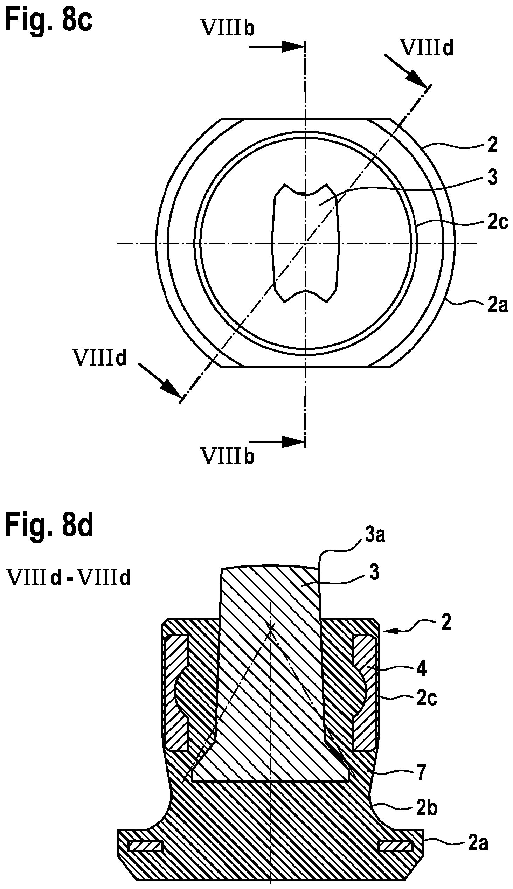

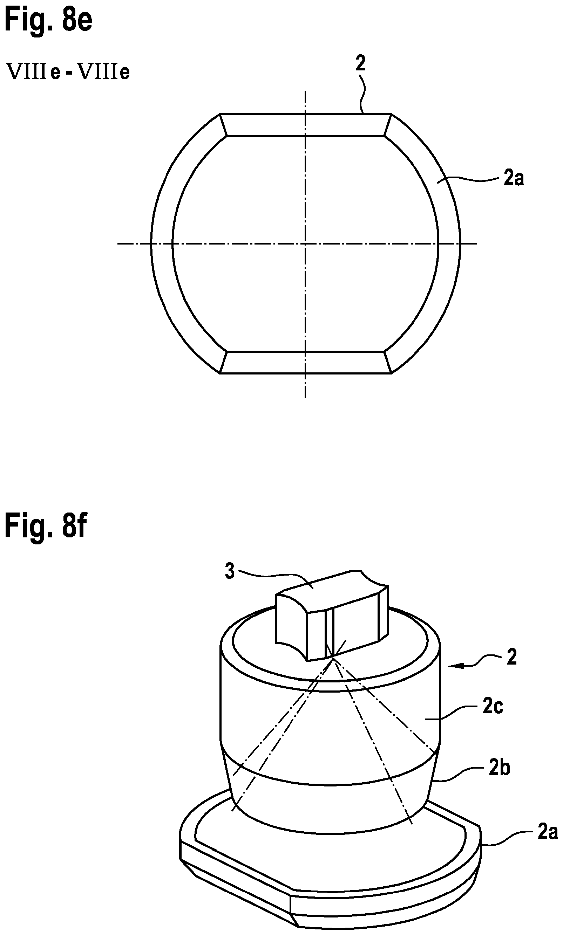

Auch das mit Spikepin 3 bestückte Gerippe 4 der Fig.7a bis 7f wird nach der Bestückung - wie oben dargestellt - zur Vervollständigung des Spikekörpers 2 und des Spikes 1 mit Kunststoffmaterial oder Kautschukmaterial gefüllt und ummantelt. Bei der Füllung und Ummantelung wird die Außenform des Spikekörpers 2 erzeugt. Der so gefertigte Spike ist in den Fig. 8a bis 8f dargestellt.

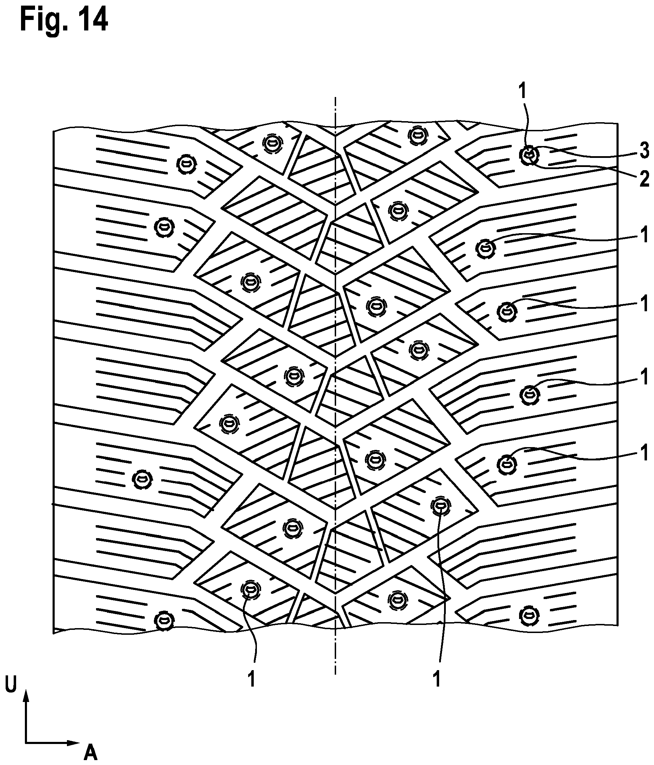

Fig. 14 zeigt das Laufstreifenprofil eines Fahrzeugluftreifens eines Personenkraftwagens oder Vans, bei welchem in bekannter Weise in der radial äußeren Oberfläche des Laufstreifenprofils in Profilblockelementen ausgebildeten Spikelöchern jeweils ein - wie oben dargestellt und beschriebener - Spike 1 befestigt ist.

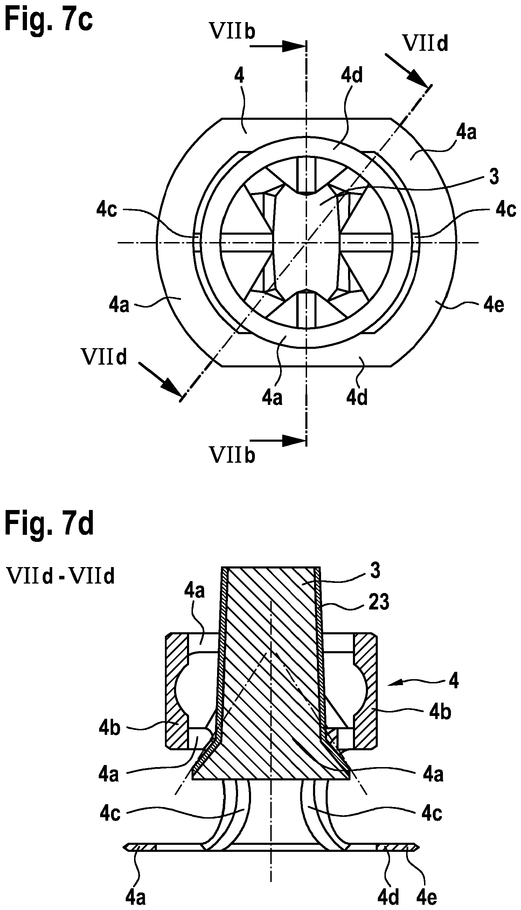

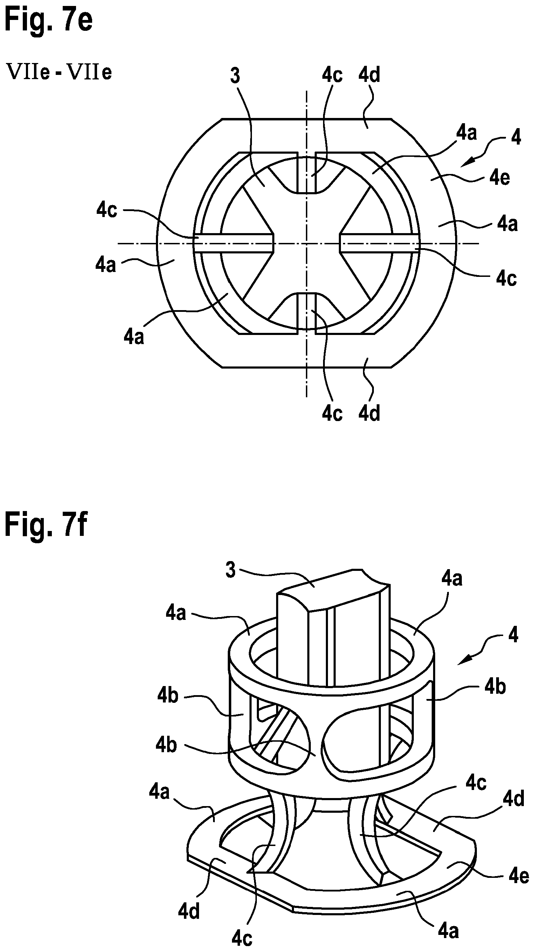

In anderer, nicht dargestellter Ausführung wird nach Herstellung des Gerippes 4 statt des Spikepins 3 ein Ausformdorn im Gerippe 4 befestigt. Dieser Zustand entspricht den in den Fig.3 bzw. Fig.7 dargestellten Ausführungen, jedoch ist anstelle des dort eingezeichneten Spikepins 3 der Ausformdorn eingefügt. Anschließend wird das mit dem Ausformdorn bestückte Gerippe 4 - wie oben beschrieben - in einer Formmulde analog zur Darstellung der Fig.9 bis Fig.13 mithilfe des Ausformdornes befestigt und anschließend mit Kautschuk oder Kunststoffmaterial umhüllt und gefüllt. Aus dem so gefüllten und umhüllten Spikekörper 2 wird anschließend der Ausformdorn entfernt. Danach wird der eigentliche Spikepin 3 in herkömmlicher Weise in die durch den Ausformdorn erzeugte Öffnung eingepresst.

### Bezugszeichenliste

### (Teil der Beschreibung)

- 1: Spike
- 2: Spikeköper
- 3: Spikepin
- 4: Gerippe
- 5 6 7: Kunsstoff- oder Gummimaterial
- 8: CAD-Modell, 8.i CAD-Schichten
- 9: Laser
- 10: Laserstrahl
- 11: 11.i Materialschichten
- 12: Verarbeitungseinheit
- 13: Plattform
- 14: Oberschale
- 15: Seitenschale
- 16: Seitenschale
- 17: Unterschale
- 18: Formeinrichtung
- 19: Aufnahmeeinrichtung
- 20: Form
- 21: Form
- 22: Form
- 23: Ummantelung
- 24: Einspritzkanal

## Patentansprüche

1. Verfahren zur Herstellung eines Spikes (1) für einen Fahrzeugreifen mit einem Spikekörper (2) und mit einem in den Spikekörper (2) eingesetzten Spikepin (3), wobei der Spikekörper (2) zumindest in Abschnitten mit offenporiger gitter- oder skelettförmiger Struktur (4) in einem Laserschmelzverfahren durch Umschmelzen von Metallpulver eines ersten Metalls hergestellt wird, und
dass der aus einem anderen Metall hergestellte Spikepin (3) danach in den Spikekörper (2) eingesetzt wird.

2. Verfahren zur Herstellung eines Spikes gemäß den Merkmalen von Anspruch 1, wobei zur Vervollständigung des Spikekörpers (2) nach dem Aufbau der zumindest in Abschnitten mit offenporiger gitter- oder skelettförmiger Struktur (4) im Laserschmelzverfahren durch Umschmelzen von Metallpulver eines ersten Metalls die gitter- oder skelettförmigen Struktur (4) zumindest im Bereich der offenporigen Abschnitte mit Kunsstoff- oder Gummimaterial (7) umspritzt wird.

3. Verfahren zur Herstellung eines Spikes gemäß den Merkmalen von Anspruch 2, wobei beim Umspritzen die offenen Poren der gitter- oder skelettförmigen Struktur (4) zumindest teilweise - insbesondere vollständig - mit Kunststoff- oder Gummimaterial (7) gefüllt werden.

4. Verfahren zur Herstellung eines Spikes gemäß den Merkmalen von einem oder mehreren der vorangegangenen Ansprüche,
wobei der Spikekörper (2) mit einem Fußflansch (2a) und mit einem Oberteil (2c) ausgebildet ist, wobei der Fußflansch (2a) mit einer offenporigen gitter- oder skelettförmiger Struktur (4) im Laserschmelzverfahren hergestellt wird.

5. Verfahren zur Herstellung eines Spikes gemäß den Merkmalen von einem oder mehreren der vorangegangenen Ansprüche,
wobei der gesamte Spikekörper (2) mit Fußflansch (2a) und Oberteil (2c) mit einer offenporigen gitter- oder skelettförmiger Struktur (4) im Laserschmelzverfahren hergestellt wird.

6. Verfahren zur Herstellung eines Spikes gemäß den Merkmalen von einem oder mehreren der Ansprüche 2 bis 5,
wobei die offenporige gitter- oder skelettförmiger Struktur (4) des Spikekörpers (2) zur Vervollständigung des Spikekörpers (2) zunächst mit Kunsstoff- oder Gummimaterial (7) umspritzt wird und danach der Spikepin in den vervollständigten Spikekörper (2) eingesetzt wird.

7. Verfahren zur Herstellung eines Spikes gemäß den Merkmalen von einem oder mehreren der Ansprüche 2 bis 5,
wobei in die offenporige gitter- oder skelettförmiger Struktur (4) des Spikekörpers (2) zunächst der Spikepin (3) eingesetzt und danach die offenporige gitter- oder skelettförmiger Struktur (4) des Spikekörpers (2) zur Vervollständigung des Spikekörpers (2) mit Kunststoff- oder Gummimaterial (7) umspritzt wird.

8. Spike (1) hergestellt durch das Verfahren nach einem der vorangegangenen Ansprüche, wobei der Spike (1) einen Spikekörper (2) und einen darin eingesetzten Spikepin (3) aufweist,
wobei der Spikekörper (2) mindestens ein Fußteil (2a) und ein Oberteil (2c) aufweist.
wobei der Spikekörper (2) zumindest in Abschnitten mit offenporiger gitter- oder
skelettförmiger Struktur (4) aus einem ersten Metall ausgebildet ist, und
wobei der Spikepin (3) aus einem anderen Metall ausgebildet ist.

## Claims

1. Method for producing a spike (1) for a vehicle tyre, comprising a spike body (2) and a spike pin (3) inserted into the spike body (2), wherein the spike body (2) is produced at least in some sections with an open-pored lattice-like or skeletal structure (4) in a laser melting process by remelting metal powder of a first metal, and in that the spike pin (3), which is produced from a different metal, is then inserted into the spike body (2).

2. Method for producing a spike according to the features of Claim 1, wherein, to complete the spike body (2), after building up the at least in some sections with an open-pored lattice-like or skeletal structure (4) in the laser melting process by remelting metal powder of a first metal, the lattice-like or skeletal structure (4) is encapsulated with plastics or rubber material (7), at least in the region of the open-pored sections.

3. Method for producing a spike according to the features of Claim 2, wherein, during the encapsulation, the open pores of the lattice-like or skeletal structure (4) are at least partially - in particular completely - filled with plastics or rubber material (7).

4. Method for producing a spike according to the features of one or more of the preceding claims, wherein the spike body (2) is formed with a bottom flange (2a) and with a top part (2c), wherein the bottom flange (2a) is produced with an open-pored lattice-like or skeletal structure (4) in the laser melting process.

5. Method for producing a spike according to the features of one or more of the preceding claims,
wherein the entire spike body (2) with the bottom flange (2a) and the top part (2c) is produced with an open-pored lattice-like or skeletal structure (4) in the laser melting process.

6. Method for producing a spike according to the features of one or more of Claims 2 to 5,
wherein, to complete the spike body (2), the open-pored lattice-like or skeletal structure (4) of the spike body (2) is first encapsulated with plastics or rubber material (7) and then the spike pin is inserted into the completed spike body (2).

7. Method for producing a spike according to the features of one or more of Claims 2 to 5,
wherein first the spike pin (3) is inserted into the open-pored lattice-like or skeletal structure (4) of the spike body (2) and then, to complete the spike body (2), the open-pored lattice-like or skeletal structure (4) of the spike body (2) is encapsulated with plastics or rubber material (7).

8. Spike (1) produced by the method according to one of the preceding claims, wherein the spike (1) has a spike body (2) and a spike pin (3) inserted therein, wherein the spike body (2) has at least a bottom part (2a) and a top part (2c), wherein the spike body (2) is formed at least in some sections with an open-pored lattice-like or skeletal structure (4) from a first metal, and wherein the spike pin (3) is formed from another metal.

## Revendications

1. Procédé de fabrication d'un clou (1) destiné à un pneumatique de véhicule et comprenant un corps de clou (2) et une tige de clou (3) insérée dans le corps de clou (2),
le corps de clou (2) étant fabriqué, au moins par portions, avec une structure squelettique ou treillissée (4) à pores ouverts par fusion d'une poudre métallique d'un premier métal dans un procédé de fusion au laser, et
la tige de clou (3) fabriquée à partir d'un autre métal différent étant ensuite insérée dans le corps de clou (2).

2. Procédé de fabrication d'un clou selon les caractéristiques de la revendication 1,
pour compléter le corps de clou (2) après la construction, au moins par portions, d'une structure squelettique ou treillissée (4) à pores ouverts par fusion d'une poudre métallique d'un premier métal dans un procédé de fusion au laser, la structure squelettique ou treillissée (4) étant enrobée avec une matière synthétique ou un caoutchouc (7) au moins dans la zone des portions à pores ouverts.

3. Procédé de fabrication d'un clou selon les caractéristiques de la revendication 2,
les pores ouverts de la structure squelettique ou treillissée (4) étant au moins partiellement, notamment complètement, remplis de matière synthétique ou de caoutchouc (7) lors de l'enrobage.

4. Procédé de fabrication d'un clou selon les caractéristiques d'une ou plusieurs des revendications précédentes,
le corps de clou (2) étant formé avec une collerette de pied (2a) et une partie supérieure (2c),
la collerette de pied (2a) étant fabriquée avec une structure squelettique ou treillissée (4) à pores ouverts à l'aide du procédé de fusion par laser.

5. Procédé de fabrication d'un clou selon les caractéristiques d'une ou plusieurs des revendications précédentes,
tout le corps de clou (2) pourvu de la collerette de pied (2a) et de la partie supérieure (2c) étant fabriqué avec une structure squelettique ou treillissée (4) à pores ouverts à l'aide d'un procédé de fusion par laser.

6. Procédé de fabrication d'un clou selon les caractéristiques d'une ou plusieurs des revendications 2 à 5,
la structure squelettique ou treillissée (4) à pores ouverts du corps de clou (2) étant d'abord enrobée avec une matière synthétique ou un caoutchouc (7) pour compléter le corps de clou (2), puis la tige de clou étant insérée dans le corps de clou (2) complété.

7. Procédé de fabrication d'un clou selon les caractéristiques d'une ou plusieurs des revendications 2 à 5,
le clou (3) étant d'abord inséré dans la structure squelettique ou treillissée (4) à pores ouverts du corps de clou (2) puis, pour compléter le corps de clou (2), la structure squelettique ou treillissée (4) à pores ouverts du corps de clou (2) étant enrobée avec une matière synthétique ou un caoutchouc (7).

8. Clou (1) fabriqué par le procédé selon l'une des revendications précédentes,
le clou (1) comportant un corps de clou (2) et une tige de clou (3) insérée dans celui-ci,
le corps de clou (2) comportant au moins une partie de pied (2a) et une partie supérieure (2c),
le corps de clou (2) étant formé, au moins par portions, à partir d'un premier métal avec une structure squelettique ou treillissée (4) à pores ouverts, et
le clou (3) étant formé à partir d'un autre métal.
